# FASCICULE DE BREVET EUROPEEN

(11) **EP 3 317 353 B1**
(45) Date de publication et mention de la délivrance du brevet: **23.10.2024**
(21) Numéro de dépôt: 16715025.9
(22) Date de dépôt: 18.03.2016
(51) Int. Cl.: C08L 95/00

(54) **PRÉPARATION EN CONTINU D'ÉMULSIONS CATIONIQUES DE BITUMES**
KONTINUIERLICHE HERSTELLUNG VON KATIONISCHEN BITUMENEMULSIONEN
CONTINUOUS PREPARATION OF CATIONIC BITUMEN EMULSIONS

(30) Priorité: 20.03.2015 FR 1552329
(43) Date de publication de la demande: 09.05.2018
(73) Titulaire: Vinci Construction, 92000 Nanterre (FR)
(72) Inventeur: DELFOSSE, Frédéric, 33600 Pessac (FR); CHEVALIER, Emmanuel, 33600 Pessac (FR); RAFFEGEAU, Hervé, 33200 Bordeaux (FR)
(74) Mandataire: Regimbeau
(86) Numéro de dépôt international: PCT/FR2016/050606
(87) Numéro de publication internationale: WO 2016/151221

(56) Documents cités:
- EP-A2- 0 283 246
- CA-A1- 2 666 413
- CN-A- 1 705 798
- CN-A- 101 519 957
- GB-A- 2 295 972
- GINGRAS JEAN-PHILIPPE ET AL: "Inline Bitumen Emulsification Using Static Mixers", vol. 46, no. 8, 1 April 2007 (2007-04-01), pages 2618 - 2627, XP055824384, ISSN: 0888-5885, Retrieved from the Internet <URL:https://pubs.acs.org/doi/pdf/10.1021/ie0611913> DOI: 10.1021/ie0611913
- LEGRAND ET AL: "Liquid-Liquid Dispersion in an SMX-Sulzer Static Mixer", CHEMICAL ENGINEERING RESEARCH AND DESIGN, ELSEVIER, AMSTERDAM, NL, vol. 79, no. 8, 1 November 2001 (2001-11-01), pages 949 - 956, XP022537894, ISSN: 0263-8762, DOI: 10.1205/02638760152721497

## Description

La présente invention concerne la préparation en continu d'émulsions cationiques de bitumes.

L'émulsion bitumineuse cationique est une dispersion de bitume dans l'eau dont la formation nécessite l'emploi d'une énergie mécanique de cisaillement du bitume (fragmentation en fines gouttelettes) et d'un émulsifiant (stabilisation des gouttelettes). Les émulsions sont utilisées dans plusieurs secteurs industriels, notamment le domaine routier.

Actuellement, les usines du secteur routier, pour fabriquer des émulsions bitumineuses, utilisent des moulins colloïdaux, selon le principe du rotor-stator. Ce procédé permet la fabrication d'émulsions contenant de 60% à 70% de bitume avec une teneur en tensioactif comprise entre 1 et 20 kg/t (kg de tensioactif par tonne d'émulsion). Les émulsions obtenues présentent un diamètre médian de 3 à 7 µm avec une déviation standard de 0,25 à 0,5. Ce procédé d'émulsification en continu est très répandu, cependant il présente quelques désavantages tels que la forte consommation d'énergie et les coûts de maintenance élevés.

La préparation d'émulsions de bitume dans des réacteurs statiques a déjà été décrite. Ainsi, la demande EP 283 246 décrit un procédé permettant l'obtention d'émulsions de bitume en mode continu et à l'aide de mélangeurs statiques. L'émulsion obtenue a directement une teneur en bitume allant de 50 à 70% en poids. Le procédé décrit comprend les étapes suivantes :
- Introduction du bitume dans un premier mélangeur statique à une température comprise entre 70°C et 250°C ;
- L'introduction d'une solution aqueuse contenant l'agent tensioactif dans le premier mélangeur statique. Cette solution aqueuse est mise en oeuvre sous pression (entre 2 et 80 bar) ;
- La mise en contact des deux phases dans le premier mélangeur statique pour obtenir l'émulsion ;
- Le passage de l'émulsion dans un deuxième mélangeur statique pour la refroidir et réduire la pression.

Les émulsions préparées ont un diamètre médian de 2 µm à 6,5 µm. Leur polydispersité n'est pas décrite.

La demande EP 994 923 décrit un procédé comprenant la préparation d'une émulsion primaire concentrée, contenant au moins 65% en poids ou au moins 70% en poids de bitume, dans des mélangeurs qui peuvent être des mélangeurs statiques, puis l'ajout d'eau pour diluer l'émulsion. Une émulsion concentrée de bitume est préparée en continu, dans un moulin colloïdal ou dans un mélangeur statique, puis, de manière continue ou discontinue, une phase aqueuse de dilution est ajoutée. Dans les exemples, l'ajout de la phase aqueuse de dilution se fait de manière discontinue.

Contrairement à ce qui est décrit de manière générique dans cette demande, l'ajout de la phase aqueuse de dilution de manière continue pose des problèmes techniques (cf exemple comparatif 2).

Les inventeurs ont cherché à obtenir des émulsions monodisperses dont on pouvait, par les paramètres de procédé notamment, contrôler la taille. Il a été découvert, de manière surprenante, qu'il était possible de fabriquer des émulsions monodisperses à taille contrôlée dans des mélangeurs statiques, par exemple de type SMX^{™} de Sulzer. Il a également été découvert qu'en préparant une émulsion très concentrée en liant bitumineux, c'est-à-dire avec une concentration supérieure à 80% en poids, la taille des gouttelettes de l'émulsion pouvait être contrôlée en jouant simplement sur la différence de pression en entrée-sortie des mélangeurs statiques.

Toutefois, pour leurs applications finales, il est préférable que la concentration en liant bitumineux soit inférieure à 80% en poids. On a donc cherché à diluer ces émulsions de bitume. On a alors constaté qu'une dilution, dans un procédé continu, par les moyens usuels de l'art entraîne un accroissement de la taille de gouttes voire une rupture de l'émulsion.

Le procédé selon l'invention vise à proposer un procédé continu qui permette l'obtention d'une émulsion cationique de bitume ayant une taille de gouttelettes comprise entre 0,5 µm et 10 µm et une teneur en bitume comprise entre 50 et 75% en poids.

L'invention a donc pour objet un procédé pour préparer en continu une émulsion cationique de bitume ayant une taille de gouttelettes comprise entre 0,2 µm et 10 µm, comprenant les étapes suivantes :
a. Introduction dans un mélangeur statique d'un liant bitumineux à une température comprise entre 100°C et 180°C, d'une phase aqueuse, et d'au moins un tensioactif cationique, en des quantités telles que la concentration en liant bitumineux soit supérieure à 80% en poids, par rapport au poids total ; puis
b. Mélange des constituants dans le mélangeur statique ou dans un enchaînement de mélangeurs statiques, dans des conditions telles que ΔP ≤ 40 bar avec ΔP = P(entrée 1^{er} mélangeur statique) - P(sortie dernier mélangeur statique), pour obtenir une émulsion de type bitume-dans-eau ayant une taille de gouttelettes comprise entre 0,2 et 10 µm et une teneur liant bitumineux supérieure à 80% en poids ;
c. Consécutivement à l'étape b), dilution en ligne de l'émulsion obtenue suite à l'étape b), par ajout dans la canalisation comprenant ladite émulsion d'un flux pressurisé de phase aqueuse, pour obtenir une émulsion de type bitume-dans-eau ayant une taille de gouttelettes comprise entre 0,2 et 10µm et une teneur liant bitumineux comprise entre 50 et 75 % en poids ;
d. Stockage de l'émulsion obtenue suite à l'étape c).

L'émulsion est avantageusement monodisperse. L'émulsion est avantageusement à taille maîtrisée, à savoir que pour une formulation donnée, on peut, en jouant sur les paramètres de procédé, et en particulier le ΔP, déterminer à l'avance la taille de particules de l'émulsion.

Le bitume est présent dans l'émulsion sous formes de fines gouttelettes dont la taille de particule peut être aisément mesurée par différentes techniques expérimentales décrites dans l'ouvrage édité par P. Becher « Encyclopedia of emulsion technology », vol. 1 (Marcel Dekker, New York, 1983), la plus utilisée étant vraisemblablement la diffraction de la lumière mise en oeuvre par des appareils connus sous le nom de « granulomètres laser » et commercialisés par exemple par les sociétés Malvern ou Coulter.

Dans la présente description, on réalise les mesures de granulométrie par diffraction et diffusion de la lumière laser intégrant la théorie de Mie. Cet essai permet de déterminer la répartition granulométrique, le diamètre médian et la surface spécifique d'une émulsion de bitume. Les mesures sont réalisées à l'aide d'un granulomètre laser Malvern muni d'un banc optique Mastersizer 2000 et d'un module voie liquide Hydro 2000G.

La répartition des diamètres des particules est représentée par un histogramme donnant la distribution des diamètres en fonction de la fraction volumique de phase dispersée, ce qui permet de calculer la distribution en nombre. Le Malvern Mastersizer permet de caractériser la dispersion par les diamètres d(V; 0,1), d(V; 0,5) et d(V; 0,9) et d32 qui correspondent respectivement à la taille maximale des particules pour 10 %, 50 %, et 90 % du volume de phase dispersée de l'échantillon, et au diamètre de Sauter (noté d32), qui est le diamètre moyen en surface.

Dans la présente description, la taille des particules est exprimée en terme de diamètre médian en volume, d(V; 0,5), noté d50, qui représente le diamètre pour lequel 50 % (en volume) des particules de l'émulsion ont un diamètre supérieur (ou de manière équivalente, inférieur) à cette valeur.

Par « émulsion monodisperse », on entend, au sens de la présente invention, une émulsion pour laquelle la déviation standard est inférieure à 0,3, avantageusement inférieure à 0,22.

Par « émulsion submicronique », on entend, au sens de la présente invention, une émulsion pour laquelle la taille des particules est inférieure à 1,5 µm, préférentiellement inférieure à 1 µm.

Une émulsion cationique est obtenue avec un agent émulsifiant comportant un ou plusieurs groupements ioniques portant une charge électrique positive. Ces émulsifiants nécessitent généralement de travailler en milieu neutre ou acidifié à des pH pouvant atteindre de manière usuelle et non limitative, des valeurs de 1 à 8, préférentiellement de 1,5 à 5. En fonction des tensioactifs utilisés, le pH de la phase aqueuse pourra être neutre voir basique ou, au contraire acide. Ainsi, par exemple, en présence de tensioactifs tels que des sels d'ammonium quaternaire, des tensioactifs non-ioniques ou amphotères, le pH pourra être neutre voir basique (avantageusement de 6 à 8). En présence exclusivement de tensioactifs cationiques autres que des sels d'ammonium quaternaire, le pH sera acide (avantageusement de 1 à 5).

Au sens de la présente invention, un mélangeur statique consiste en une série d'éléments, non moteurs, placés à l'intérieur d'une conduite qui peut être une colonne, un tuyau ou un réacteur. L'objectif de ces éléments de mélange est de redistribuer le fluide dans la direction transversale à l'écoulement principal. Les mélangeurs statiques sont des dispositifs à basse consommation énergétique et à faible coût de maintenance grâce à l'absence de parties mobiles.

Par « température ambiante », on entend, au sens de la présente invention, une température comprise entre 15°C et 30°C.

Dans le cadre de l'invention, on utilisera indifféremment les termes « bitume » et « liant bitumineux », voire « liant ».

Le procédé est continu, ce qui signifie que les étapes b) et c) notamment sont réalisées de manière continue. Il n'y a donc avantageusement pas d'étape de stockage intermédiaire entre l'étape b) et l'étape c).

### Etape a)

Les termes « poids total » font référence au poids total de tous les éléments introduits dans le mélangeur statique, à savoir avantageusement le liant bitumineux, la phase aqueuse et le tensioactif cationique.

On entend par « liant bitumineux » tout liant hydrocarboné, qui peut être d'origine fossile, d'origine synthétique ou d'origine végétale. On utilise avantageusement un liant recommandé pour la réalisation de produits routiers. Le liant pourra être choisi en fonction de l'application finale (produits routiers, produits d'étanchéité, ...).

Le liant pourra être un liant mou à dur, avantageusement d'un grade allant de 160/220 à 10/20. Avantageusement, le liant bitumineux a une pénétrabilité, mesurée selon la norme NF EN 1426, exprimée en 1/10 mm, comprise entre 10 et 500, plus avantageusement entre 20 et 220.

Le liant peut comprendre des additifs couramment utilisés dans le domaine routiers, tels que des polymères réticulés ou non, des poudrettes de caoutchouc, des cires végétales ou d'origine pétrochimique, des dopes d'adhésion. Le liant bitumineux peut avantageusement être utilisé pur ou fluidifié et/ou fluxé et /ou modifié.

Parmi les polymères utilisables pour modifier les liants bitumineux, on peut citer les copolymères styrène-butadiène, les copolymères styrène-isoprène, les copolymères d'éthylène, par exemple le poly(ethylene-vinyl acetate), les terpolymères, tel que par exemple le composé d'une chaîne éthylénique avec des groupements fonctionnels d'acrylate de butyle et de glycidyl acrylate de méthyle qui assurent une bonne stabilité au mélange liant bitumineux/polymère, les élastomères et les plastomères permettant une amélioration importante des performances mécaniques. Ces bitumes polymères peuvent être fabriqués selon différents procédés, avantageusement par un mélange physique ou par réticulation. Les bitumes modifiés par des polymères sont définis par la norme NF EN 14023 et le document « guide technique : emploi des liants modifiés, des bitumes spéciaux et des bitumes avec additifs en techniques routières » publié par le Laboratoire Central des Ponts et Chaussées LCPC (ISSN 1151-1516 ISBN 2-7208-7140-4).

La teneur en polymère dans le liant bitumineux varie avantageusement de 0 à 20% en poids, plus avantageusement de 0 à 5% en poids, encore plus avantageusement de 1 à 5% en poids, par rapport au poids total du liant bitumineux.

L'émulsion pourra contenir du latex synthétique ou naturel. Par latex on entend une dispersion de polymères (SBS copolymère bloc styrène-butadiène-styrèbe, SB copolymère bloc styrène-butadiène, copolymère bloc styrène-acrylique, acrylique) en phase aqueuse. Ce latex est incorporé dans la phase aqueuse avant émulsification ou en ligne pendant la fabrication de l'émulsion soit encore après fabrication de l'émulsion. La teneur en latex varie avantageusement de 5 à 60 kg/t d'émulsion diluée, préférentiellement 10 à 40 kg/t d'émulsion diluée.

Le liant peut également comprendre un dope d'acide gras. Le dope d'acide gras peut être tout acide gras et dérivés, en particulier des diacides gras, triacides gras, dimère d'acides gras ou trimère d'acides gras, adapté à une utilisation dans un matériau bitumineux.

Par « acide gras » on entend un acide mono-, di- ou tricarboxylique à chaîne aliphatique, saturée ou insaturée, contenant 10 à 28 atomes de carbone, avantageusement 12 à 20 atomes de carbone.

Les acides gras peuvent être d'origines fossiles, animales, végétales ou de synthèse. Ils peuvent avoir subi une fonctionnalisation chimique et ainsi porter au moins une fonction chimique choisie parmi les fonctions alcool, ester, époxy, péroxyde, acide carboxylique et aldéhyde.

Par « dérivés d'acides gras », on entend par exemple les acides gras polymérisés ou des diacide ou triacide d'acides gras. La masse moléculaire des dérivés d'acides gras sera comprise préférentiellement entre 600 et 800 g/mol.

De préférence, l'acide gras est choisi dans le groupe constitué de l'acide oléique, de l'acide linoléique, de l'acide linolénique, et leurs mélanges.

Le dope d'acide gras peut être ajouté au liant bitumineux en mélange avec les polymères ajoutés au liant ou en ligne.

La teneur en dope d'acide gras varie avantageusement de 0% à 2 % en poids, par rapport au poids du liant, plus avantageusement de 0,5 à 1% en poids.

On peut ajouter également au liant bitumineux un dope d'adhésivité. On entend par « dope d'adhésivité » un additif tensioactif permettant d'améliorer l'adhésivité du liant bitumineux sur les fractions solides minérales en présence d'eau ou à sec. Les dopes d'adhésivité favorisent le mouillage des surfaces minérales par le liant et s'opposent à la rupture par l'eau de la liaison minéral/liant. Les dopes d'adhésivité sont définis dans la norme NF P98-150.

A titre d'exemple de dope d'adhésivité, on peut citer les composés tensioactifs azotés dérivés des acides gras (amines, polyamines...), en particulier les émulsifiants dérivés des polyamines.

Dans le cadre de la présente invention, le dope d'adhésivité est incorporé dans la masse du liant. La teneur en dope d'adhésivité est avantageusement comprise entre 0,1 et 0,5% en poids, plus avantageusement entre 0,2 et 0,4% en poids, par rapport au poids total du liant bitumineux.

Lors de l'étape a), la teneur en liant bitumineux est avantageusement supérieure à 80% en poids de liant, par rapport au poids total de l'émulsion, plus avantageusement supérieure à 85% en poids, encore plus avantageusement supérieure à 90% en poids. Elle peut aller avantageusement jusqu'à 92% en poids.

L'émulsion de bitume est une dispersion du liant bitumineux dans l'eau, phase continue du système. Elle comprend au moins un tensioactif.

La teneur en tensioactif(s) varie avantageusement de 0,1 à 3% en poids, par rapport au poids total de l'émulsion diluée, plus avantageusement de 0,1 à 2% en poids. La teneur en tensioactif(s) varie avantageusement de 1 à 30 kg par tonne d'émulsion diluée, plus avantageusement de 1 à 20 kg par tonne d'émulsion diluée.

On ajoute avantageusement au moins un tensioactif cationique. A titre de tensioactif cationique, on peut notamment citer les amines primaires, secondaires et tertiaires, les polyamines, les diamines, les sels d'amines quaternaires, les amines éthoxylées, les imidazolines, les amides, les amidazolines, les oxyde amines, et les amido-amines. On peut par exemple citer les produits commerciaux suivants : Dinoram^{®} S (CECA), Polyram^{®} S (CECA), Stabiram^{®} (CECA), Redicote 404 (AKZO NOBEL).

On peut également ajouter un tensioactif non-ionique et/ou un tensioactif amphotère.

A titre de tensioactif non-ionique, on peut notamment citer les alcools gras polyalcoxylé, nonylphénol polyalcoxylé ou autres molécules polyalcoxylés. On peut par exemple citer le produit commercial Redicote^{®} 4875(AKZO NOBEL).

A titre de tensioactif amphotère, on peut notamment citer les alkyl-amino-acides. On peut par exemple citer le produit commercial Indulin^{®} GE F 2. Ces molécules ont la particularité d'avoir un pouvoir ionique différent en fonction du pH.

Le tensioactif est avantageusement introduit dans la phase aqueuse. Toutefois, tout ou partie du (des) tensioactif(s) peut également être introduit en amont dans le liant bitumineux.

Lors de l'étape a), le liant bitumineux est avantageusement introduit à une température comprise entre 120°C et 180°C, plus avantageusement entre 130°C et 160°C.

La phase aqueuse comprend de l'eau. Cette eau peut également comprendre un acide. Par acide, on entend par exemple, l'acide phosphorique et ses dérivés, sels et esters, l'acide chlorhydrique, l'acide sulfurique, l'acide acétique et tout acide ou combinaison d'acide.

La phase aqueuse peut également comprendre tout additif usuel, tel que les additifs suivants : les agents viscosifiants, les régulateurs de prise ou les sels, par exemple, les chlorures de calcium, de potassium, de sodium ou tout autre sel de calcium, potassium, sodium ou magnésium, les agents thixotropes, les stabilisateurs, les agents régulateurs de rhéologie.

Lors de l'étape a), la phase aqueuse est avantageusement introduite à une température comprise entre 15°C et 60 °C. Avantageusement, la phase aqueuse est introduite à température ambiante.

### Etape b)

Une caractéristique importante du procédé est l'étape b) de préparation en continu de l'émulsion de bitume dans des mélangeurs statiques. Par l'utilisation de mélangeurs statiques, en combinaison avec une concentration élevée en liant bitumineux, supérieure à 80% en poids, il est possible d'obtenir des émulsions fines, avantageusement monodisperses. Les émulsions peuvent être submicroniques. Il a en outre été découvert que, pour une même formulation, en faisant varier la différence de pression, entre l'entrée et la sortie du mélangeur statique, ou de la succession de mélangeurs statiques, il était possible de contrôler la taille des particules ensuite obtenues.

Lors de l'étape b), on utilise avantageusement une succession de mélangeurs statiques. Les mélangeurs statiques peuvent être différents ou identiques. Les conditions de l'étape b) permettent avantageusement un cisaillement continu. On estime que le taux de cisaillement varie avantageusement de 3 000 s⁻¹ à 10 000 s⁻¹. Lors de l'étape b), le régime est avantageusement laminaire voire transitoire. Le nombre de Reynolds est avantageusement inférieur 3000 et préférentiellement inférieur à 1000.

Avantageusement chaque mélangeur statique comprend un réseau de barres entrecroisées et inclinées par rapport à la direction de l'écoulement, l'angle d'inclinaison est le plus souvent de 45°. Les unités de mélange adjacentes sont placées de façon à former un angle de 90° l'une par rapport à l'autre pour favoriser davantage le contact entre les fluides. La direction transversale de l'écoulement change ainsi d'un élément à l'autre. Chaque élément comprend avantageusement de 4 à 10 barres, plus avantageusement de 6 à 8 barres. De tels mélangeurs sont par exemple des mélangeurs SMX^{™} ou SMX^{™} PLUS commercialisés par Sulzer.

La relation I/D (rapport longueur/diamètre d'un élément de mélangeur statique) est avantageusement d'environ 1.

Lors de l'étape b), on a avantageusement un ΔP ≤ 40 bar avec ΔP = P(entrée 1^{er} mélangeur statique) - P(sortie dernier mélangeur statique). Plus avantageusement, le ΔP est ≤ 20 bar, encore plus avantageusement ≤ 15 bar. Dans un mode de réalisation, la pression en entrée est de 15 bar et celle en sortie est de 4 bar. Dans un autre mode de réalisation, la pression en entrée est de 20 bar et celle en sortie est de 10 bar.

Il est possible de prévoir une vanne d'étranglement, après le dernier mélangeur statique pour augmenter la pression de sortie. Il est en effet important que la pression de sortie soit supérieure à la pression de vapeur saturante de l'eau dans le système.

Dans une variante, le ΔP varie de 5 à 8 bar et l'émulsion obtenue à une taille de gouttelettes supérieure à 2µm, avantageusement comprise entre 2 µm et 10 µm.

Dans une autre variante, le ΔP varie de 8 et 15 bar et l'émulsion obtenue à une taille de gouttelettes inférieure à 2µm, avantageusement comprise entre 0,2 µm et 2 µm.

Sans vouloir se limiter, les inventeurs pensent que le processus d'émulsification passe par une étape d'inversion catastrophique de phases, dès le (les) premier(s) mélangeur(s) statique(s) suite à laquelle l'émulsion est affinée par action de l'agitation mécanique dans le (les) mélangeur(s) statique(s) qui suit (suivent).

Le procédé selon l'invention permet l'obtention d'émulsions qui peuvent être submicroniques. Le fait d'obtenir des émulsions submicroniques sans besoin de refroidir le bitume, comme dans le cas des procédés discontinus, constitue également un atout significatif.

Il est alors possible de prévoir un enchaînement de mélangeurs statiques identiques ou différents. Dans une variante, préférée, des mélangeurs statiques de diamètre plus important (par exemple 15 mm à 150 mm) sont utilisés en amont du procédé, lors de la phase de mélange initial - inversion catastrophique de phases. Puis, on peut utiliser des mélangeurs statiques de diamètre plus étroit (par exemple de 10 mm à 100 mm, en fonction du diamètre des mélangeurs précédent) lors de la phase d'affinement de l'émulsion. Il a été constaté que le nombre de mélangeurs statiques doit être suffisant pour atteindre l'affinement recherché. Par exemple, pour un débit de 500 kg/h une émulsion fine peut être obtenue par l'enchainement de 1 ensemble de 6 éléments SULZER SMX^{™} DN 15 (diamètre nominal : 15 mm, longueur d'un élément: 20 mm, nombre d'éléments dans l'ensemble : 6) puis 3 ensembles de 6 éléments SULZER SMX^{™} DN 10 (diamètre nominal: 10 nm, longueur d'un élément: 10 mm, nombre d'éléments pour les 3 ensembles : 18).

Il est également envisageable de monter en parallèle plusieurs lignes de mélangeurs statiques, par exemple de 2 à 10. Ces lignes peuvent être identiques ou différentes.

Par exemple, on peut prévoir des lignes dans lesquelles les mélangeurs statiques ont des diamètres différents, dans lesquelles les pressions appliquées sont différentes, dans lesquelles les débits sont différents, ..., permettant ainsi l'obtention d'émulsions de tailles différentes.

Avantageusement, on utilise plusieurs lignes en parallèle de mélangeurs statiques, ces lignes sont avantageusement identiques. L'utilisation de plusieurs lignes en parallèle, qui peuvent être asservies par la même pompe, permettra notamment d'augmenter le débit global de production. Ainsi, lors de l'étape b), le débit est avantageusement compris entre 0,1 et 40 T/h, plus avantageusement entre 0,1 et 30 T/h. Un débit global compris entre 10 et 40 T/h, avantageusement entre 20 et 30 T/h, peut notamment être obtenu en montant plusieurs lignes en parallèle. Le débit dans chaque ligne varie avantageusement de 0,5 à 30 T/h. Dans une première variante, le débit dans chaque ligne varie avantageusement de 20 à 30 T/h. Dans une autre variante, le débit dans chaque ligne varie avantageusement de 0,5 à 20 T/h, plus avantageusement de de 0,5 à 10 T/h, encore plus avantageusement de 1 à 5 T/h.

### Etape c)

Une caractéristique importante du procédé est l'étape c) de dilution. On a en effet constaté qu'en présence d'une émulsion fine, avantageusement monodisperse, très concentrée en liant bitumineux, concentration supérieure à 80% en poids, une dilution par des moyens usuels entraîne un accroissement de la taille de gouttes voire une rupture de l'émulsion. On constate également en continu une mauvaise dispersion des deux fluides possédant une grande différence de viscosité, malgré l'emploi de mélangeurs statiques pour réaliser la dilution. Au contraire, lorsque la dilution est réalisée dans des conditions permettant un mélange instantané et homogène des deux fluides (l'émulsion concentrée de bitume et la phase aqueuse de dilution), il est possible de diluer l'émulsion tout en la préservant et en conservant la distribution de particules initiale. Les conditions permettant un mélange instantané et homogène des deux fluides sont notamment la création de turbulences dans la zone d'introduction de la phase aqueuse.

Un moyen particulièrement adapté est l'introduction dans la canalisation contenant l'émulsion en sortie du dernier mélangeur statique de l'étape b) d'un flux pressurisé de phase aqueuse de dilution. Avantageusement, cette canalisation, c'est-à-dire la canalisation contenant l'émulsion, ne comprend pas d'élément statique directement au(x) point(s) d'injection du flux.

En présence de plusieurs lignes de mélangeur(s) statique(s), la canalisation de dilution peut être en sortie de la canalisation intermédiaire regroupant toutes les sorties de mélangeurs statiques. Lorsque les lignes de mélangeurs statiques sont différentes (mélangeurs différents, débits différents, concentrations différentes, pressions différentes, ...), on prévoit avantageusement autant de canalisation de dilution que de ligne différente.

Avantageusement, le flux est pressurisé de telle sorte que la différence de pression soit supérieure à 2 bar, avantageusement comprise entre 2 et 10 bar, plus avantageusement supérieure à 3 ou 8 bar. La différence de pression correspond à la différence entre la pression dans la canalisation d'apport de la phase aqueuse de dilution et la pression dans la canalisation contenant l'émulsion à diluer. Une telle introduction de la phase aqueuse sous pression créé des turbulences à la (aux) zone(s) d'injection(s) et ainsi conduit à un mélange instantané et homogène de la phase aqueuse et de l'émulsion de bitume. La phase aqueuse de dilution peut être introduite en un ou plusieurs point(s) d'injection, par exemple en un ou deux point(s) d'injection. Ces points d'injection peuvent être alignés ou répartis sur la circonférence du tube. La phase aqueuse peut être introduite perpendiculairement à la pâte ou orientée de + ou - 60 ° par rapport à l'axe préférentiellement + ou - 45 ° . Pour favoriser sa dispersion, la phase aqueuse pourra être introduite dans des buses de pulvérisation.

La phase aqueuse de dilution est avantageusement introduite à une température comprise entre 10°C et 40°C, avantageusement à température ambiante. La phase aqueuse comprend de l'eau. Elle peut également comprendre un ou plusieurs tensioactifs, en particulier ceux décrits précédemment. La quantité de tensioactifs présent dans cette phase aqueuse de dilution dépend directement de la quantité de tensioactifs introduite lors de l'étape a). Pour rappel, l'émulsion finale diluée comprend avantageusement de 1 à 30kg de tensioactif par tonne d'émulsion. Généralement, la quantité de tensioactif qui peut être ajouté à cette étape varie 0 à 10 kg/t d'émulsion diluée, préférentiellement 0 à 2 kg/t d'émulsion diluée. La phase aqueuse peut également être acidifiée à un pH allant de 1,5 à 5, par ajout d'un acide tel que l'acide phosphorique et ses dérivés, sels et esters, l'acide chlorhydrique, l'acide sulfurique, l'acide acétique et tout acide ou combinaison d'acide.

Cette phase aqueuse de dilution peut également comprendre d'autres additifs, tels qu'en particulier du latex, tel que défini précédemment, ou les additifs usuels, tels que décrits précédemment.

Le procédé comprend avantageusement, à la fin de l'étape c), une étape de refroidissement à une température inférieure à 100°C. Cette étape peut être réalisée dans des mélangeurs statiques ou dans une simple canalisation pouvant comprendre une double enveloppe. Au cours de cette étape supplémentaire, la pression pourra également être réduite jusqu'à pression atmosphérique.

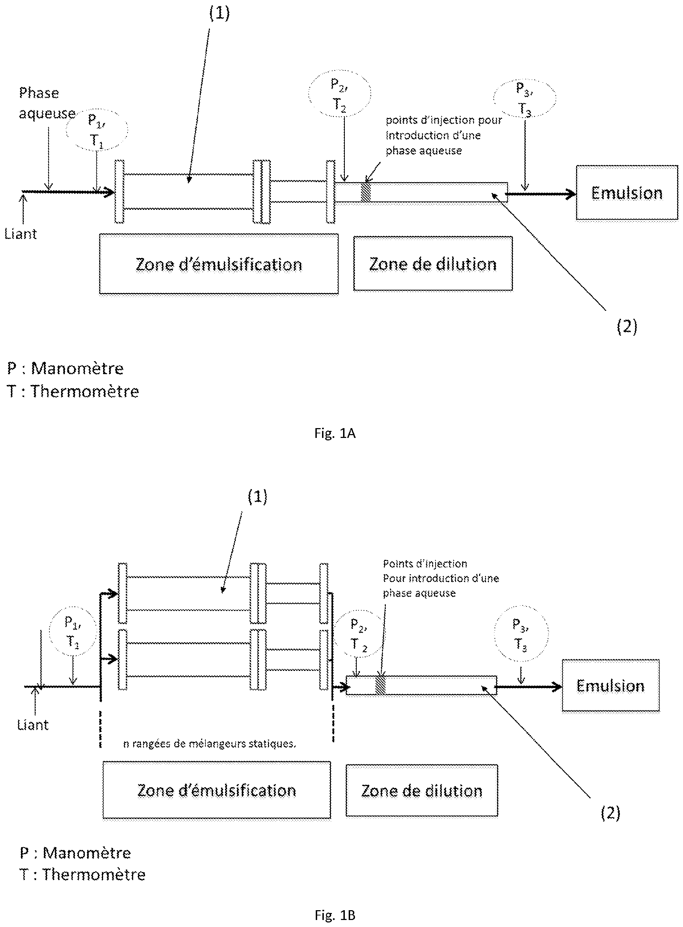

Le dispositif utilisé dans le procédé selon l'invention est exemplifié par les figures 1A et 1B dans lesquelles un liant et une phase aqueuse sont introduits dans une succession de mélangeurs statiques (1), qui peuvent constituer une seule ligne (figure 1A) ou qui peuvent être montés sur plusieurs lignes en parallèle (figure 1B). La succession de mélangeurs statiques constitue la zone d'émulsification et le dispositif prévoit avantageusement des outils de mesure (en particulier : manomètre, thermomètre) en entrée du premier mélangeur statique et en sortie du deuxième mélangeur statique.

En sortie, le dernier mélangeur statique est relié à une canalisation (2) dans laquelle une phase aqueuse de dilution va être introduite sous pression par un ou plusieurs points d'injection. Cette canalisation va constituer la zone de dilution et le dispositif pourra comprendre en sortie de la canalisation des outils de mesure (en particulier : manomètre, thermomètre).

L'invention se rapporte également à un dispositif permettant la préparation d'émulsions de bitume comprenant un ou plusieurs mélangeurs statiques, avantageusement de typer SMX^{™}, tels que décrits précédemment. Le dernier mélangeur statique est relié à une canalisation, ladite canalisation comprend des moyens permettant l'introduction sous pression d'une phase aqueuse de dilution. La canalisation est avantageusement, en aval de ces moyens, d'une longueur suffisante pour permettre une bonne dispersion.

Dans une variante avantageuse, le dispositif comprend plusieurs lignes de mélangeurs statiques, pour émulsification, montées en parallèle. Ces lignes peuvent être asservies par une même pompe.

Le dispositif peut par exemple comprendre jusqu'à 10 lignes en parallèle.

En présence de plusieurs lignes de mélangeur(s) statique(s), la canalisation de dilution peut être en sortie de la canalisation intermédiaire regroupant toutes les sorties de mélangeurs statiques. Lorsque les lignes de mélangeurs statiques sont différentes (mélangeurs différents, débits différents, concentrations différentes, pressions différentes, ...), on prévoit avantageusement autant de canalisation de dilution que de ligne différente.

Le dispositif comprend en amont de l'entrée du premier mélangeur statique, pour émulsification, une pompe permettant d'introduire le liant et la phase aqueuse à la pression désirée.

En sortie de la canalisation (ou des canalisations) de la zone de dilution, le dispositif peut comprendre un ou plusieurs mélangeurs statiques ou une canalisation, éventuellement à double enveloppe, permettant de refroidir l'émulsion. Cette zone de refroidissement n'est pas représentée sur les figures 1A ou 1B.

L'émulsion obtenue par le procédé selon l'invention peut ensuite être utilisée telle quelle ou être utilisée en tant que produit intermédiaire pour la préparation d'une émulsion bimodale.

Dans une première variante, l'émulsion obtenue par le procédé selon l'invention est ensuite utilisée telle quelle. Il y a plusieurs types d'émulsions de bitume, utilisées en fonction de leur application (la construction, l'entretien ou même la rénovation de chaussée). Les deux principales familles sont : les émulsions de répandage et les émulsions d'enrobage.

### Les émulsions de répandage

Ce type d'émulsion a pour caractéristique principale la rupture rapide sur le support. En général, sa teneur en tensioactif est faible (avantageusement 0,1 à 0,3% en poids de tensioactif par rapport au poids total de l'émulsion diluée) pour une concentration en bitume supérieure ou égale à 50%, plus avantageusement supérieure ou égale à 55%, encore plus avantageusement supérieure ou égale à 60%, plus généralement supérieure ou égale à 65 % en poids. Il y a deux applications principales :
- Les couches d'accrochage : La chaussée est composée de couches de matériaux liés. Chaque couche doit être performante et la structure dans son ensemble doit également l'être. Les conditions de liaisons aux interfaces de ces couches sont donc très importantes. Les couches d'accrochage permettent de lier les couches entre elles pour éviter une déformation des matériaux ou le glissement d'une couche par rapport à une autre.
- Les enduits superficiels d'usure : Il s'agit d'une couche de roulement de faible épaisseur constituée de couches superposées de liants bitumineux et de gravillons. Les ESU peuvent servir à créer la couche de roulement d'une chaussée neuve, à régénérer les caractéristiques de surface d'une chaussée usée, ou encore à imperméabiliser une chaussée.

### Les émulsions d'enrobage

Ces émulsions ont avantageusement une teneur en émulsifiant comprise entre 0,2 % et 3 % en poids, plus avantageusement entre 0,3% et 1,5% en poids, de tensioactif par rapport au poids total de l'émulsion finale diluée. Les applications principales sont décrites ci-dessous :
- Les matériaux bitumineux coulés à froid : Les enrobés sont réalisés à partir de granulats (non séchés et non chauffés) et d'émulsion. Leur principale application est la couche de surface, puisqu'ils apportent à la fois une imperméabilisation des supports et une bonne adhérence. Ils nécessitent l'utilisation d'une machine spécifique qui procède directement au mélange et à l'application sur la chaussée.
- Les « grave-émulsions » : Ces produits sont obtenus par dispersion d'une émulsion de bitume à rupture lente contrôlée au sein d'une grave, puis par malaxage à froid du mélange. Les principales applications des « grave-émulsions » sont les travaux routiers, la construction neuve, l'entretien (reprofilages et réparations localisées) et enfin le renforcement des chaussées. L'épaisseur varie de 0 à 10 cm.

Dans une deuxième variante, l'émulsion obtenue par le procédé selon l'invention utilisée en tant que produit intermédiaire pour la préparation d'une émulsion bimodale. Pour se faire, l'émulsion doit être fine, c'est à dire avec une taille de particules avantageusement inférieure à 2 µm, voire inférieure à 1µm. On utilise également dans cette variante une émulsion contenant des quantités significatives en tensio-actifs, avantageusement comprenant plus de 8 kg de tensioactif par tonne d'émulsion, plus avantageusement comprenant plus de 10 kg de tensio-actif par tonne d'émulsion.

L'invention a également pour objet un procédé de préparation d'une émulsion cationique bimodale de bitume comprenant les étapes suivantes :
i. Préparer une émulsion cationique de bitume selon l'invention de diamètre inférieur à 2 µm, avantageusement inférieur à 1 µm, et comprenant plus de 4 kg de tensio-actif par tonne d'émulsion ;
ii. Mélanger l'émulsion obtenue suite à l'étape i), une phase aqueuse et un liant bitumineux pour obtenir une émulsion bimodale.

L'émulsion cationique de bitume selon l'invention a une teneur en bitume comprise entre 50 et 75% en poids.

L'étape i) est un procédé en continu comprenant les étapes suivantes :
a) Introduction dans un mélangeur statique d'un liant bitumineux à une température comprise entre 120°C et 180°C, d'une phase aqueuse, et d'au moins un tensioactif cationique, en des quantités telles que la concentration en liant bitumineux soit supérieure à 80% en poids et que l'émulsion comprenne plus de 4 kg de tensio-actif par tonne d'émulsion ; puis
b) Mélange des constituants dans le mélangeur statique ou dans un enchaînement de mélangeurs statiques, dans des conditions telles que ΔP varie entre 8 et 15 40 bar avec ΔP = P(entrée 1^{er} mélangeur statique) - P(sortie dernier mélangeur statique) pour obtenir une émulsion de type bitume-dans-eau ayant une taille de gouttelettes comprise entre 0,2 et 2µm et une teneur en liant bitumineux supérieure à 80% en poids ;
c) Consécutivement à l'étape b), dilution en ligne de l'émulsion obtenue suite à l'étape b), par ajout dans la canalisation comprenant ladite émulsion d'un flux pressurisé de phase aqueuse pour obtenir une émulsion de type bitume-dans-eau ayant une taille de gouttelettes comprise entre 0,2 et 2µm et une teneur en liant bitumineux comprise entre 50 et 75% en poids
d) Le cas échéant, stockage de l'émulsion obtenue suite à l'étape c)

A l'étape i), la teneur en tensioactif est avantageusement supérieure à 8 kg de tensio-actif par tonne d'émulsion, plus avantageusement supérieure à 10 kg de tensio-actif par tonne d'émulsion. La teneur en tensioactif est avantageusement comprise entre 4 et 15 kg/t d'émulsion, plus avantageusement entre 8 et 15 kg/t d'émulsion, encore plus avantageusement entre 10 et 15 kg/t d'émulsion.

L'émulsion obtenue à la fin de l'étape i) est appelée, dans ce qui suit, « émulsion primaire ».

A l'étape ii), la phase aqueuse peut éventuellement être acidifiée. Le pH de la phase aqueuse est avantageusement ajusté en fonction du ou des tensioactifs présent(s) dans l'émulsion de l'étape i), et optionnellement également ajouté à cette phase aqueuse, pour répondre aux recommandations d'emploi dudit ou desdits tensioactifs. Les recommandations précédentes trouvent également à s'appliquer ici.

L'émulsifiant peut être totalement apporté par l'émulsion primaire ou être également apporté par la phase aqueuse et/ou le liant bitumineux de l'étape ii). On peut en particulier introduire un émulsifiant différent, permettant d'ajuster la cinétique de rupture de l'émulsion. Avantageusement, la totalité des tensioactifs est apportée par l'émulsion primaire.

La phase aqueuse peut également comprendre tout additif décrit précédemment pour la phase aqueuse de dilution.

A l'étape ii), le liant bitumineux peut être tout type de bitume, pur ou dopé et/ou additivé, par exemple avec des polymères. Il peut également comprendre un tensioactif cationique, non ionique et/ou amphotère. Les liants bitumineux décrits précédemment peuvent être utilisés à cette étape. Le liant bitumineux de l'étape ii) peut être identique ou différent du liant bitumineux utilisé à l'étape a), lors de la préparation de l'émulsion cationique primaire de bitume.

L'émulsion bimodale contiendra deux populations de particules : une population avec une taille de particules inférieure à 2 µm et une population avec une taille de particules supérieure à 2 µm. Selon une modalité préférentielle de l'invention, le diamètre médian de l'émulsion primaire (ou de la première population) est compris entre 0,2 µm et 2 µm et préférentiellement compris entre 0,5 µm et 1,5 µm.

Selon une modalité préférentielle de l'invention, le diamètre médian de la deuxième population est compris entre 2 µm et 20 µm et préférentiellement compris entre 3 µm et 12 µm.

Selon une modalité préférentielle de l'invention, le diamètre médian de la première population est au moins 2 fois plus petit que celui de la deuxième population, et préférentiellement au moins 6 fois inférieur, encore plus préférentiellement au moins 8 fois inférieur. Le diamètre médian de la première population peut être jusqu'à 10 fois plus petit que celui de la deuxième population.

Le procédé peut également comprendre une étape iii) de dilution de l'émulsion bimodale, par des moyens classiques.

En effet, cette émulsion finale peut également être diluée pour en ajuster la teneur en bitume et ajuster la viscosité. La teneur totale en bitume sera avantageusement comprise entre 70 et 85 % en poids de bitume préférentiellement entre 73 et 80 % en poids, par rapport au poids total de l'émulsion diluée.

En fonction du ratio entre la taille de goutte de bitume apporté par l'émulsion primaire et la teneur totale en bitume, l'homme de l'art pourra ajuster la viscosité de l'émulsion afin d'obtenir une émulsion à forte teneur en bitume et à viscosité maîtrisée. La viscosité STV à 40ºC avec l'orifice de 4 mm sera inférieure à 300 secondes préférentiellement ≤ 100 s voire ≤60 s et la tendance à la décantation mesurée par l'essai EN 12847 sera inférieure à 10 %, permettant son emploi avec les procédés actuels de mise en oeuvre, de stockage et de transport des émulsions routières de bitume.

Selon une modalité préférentielle de l'invention, la teneur en émulsion primaire est telle que le bitume provenant de l'émulsion primaire soit à une teneur comprise entre 5% et 95 % massique du bitume total, et préférentiellement entre 10 % et 40 %.

Lors de l'étape ii), on peut utiliser tout procédé approprié, avantageusement en continu, notamment un moulin colloïdal, un ou une succession de mélangeurs statiques.

L'intérêt et les modalités pratiques de l'invention sont illustrées, de manière non limitative, par les exemples suivants.

### Descriptif des figures :

Figures 1A : dispositif selon l'invention, à une ligne d'émulsification
Figures 1B : dispositif selon l'invention, à plusieurs lignes d'émulsification
Figures 2A : distribution de granulométrie (%volume en fonction du diamètre médian (µm)) pour la pâte (trait continu) et l'émulsion diluée à 69%. (trait pointillé). 14.5 kg de tensioactif/t d'émulsion pour une dilution théorique à 69%
Figures 2B : distribution de granulométrie (%volume en fonction du diamètre médian (µm)) pour la pâte (trait continu) et l'émulsion diluée à 69%. (trait pointillé). 1.6 kg de tensioactif /t d'émulsion pour une dilution théorique à 69%
Figure 3 : système d'injection qui consiste à injecter l'eau sous-pression dans la pâte, à travers un orifice
Figure 4 : d50 (µm) en fonction de la teneur en bitume. En gris, taille de particule pour une émulsion obtenue directement à cette concentration. En noir, taille de particule pour l'émulsion 90/10 diluée à cette concentration.

### Exemple 1 : préparation d'une émulsion concentrée

### Paramètres de formulation :

| | |
|---|---|
| type de tensioactif | DINORAM^{®} S (suifpropylènediamine, fournisseur : CECA) Teneur en tensioactif 1.6 kg/t d'émulsion à 14.5 kg/t d'émulsion pour une dilution théorique à 69% |
| Type de liant | 70/100 Total Gonfreville |

Dans ce qui suit, nous allons décrire un mode de réalisation illustratif mais non limitatif du procédé selon l'invention, pour obtenir des émulsions concentrées de bitume en continu.

On utilise des mélangeurs statiques SMX^{™} de Sulzer. Le mélangeur SMX^{™} est constitué d'un réseau de barres entrecroisées et inclinées à 45° par rapport à la direction de l'écoulement. Ils sont répartis immédiatement et transversalement au plus près de la paroi, éliminant ainsi les problèmes de passages préférentiels. Les unités de mélange adjacentes sont placées de façon à former un angle de 90°. Le nombre de barres disposées sur la section transversale est de 8.

On travaille avec la séquence suivante de mélangeurs : 1 ensemble de 6 éléments SMX^{™} (DN15) et 3 ensembles de 6 éléments SMX^{™} (DN10) soit au bilan 6 éléments SMX^{™} 15 + 18 éléments SMX^{™} 10. La zone d'émulsification est équipée de capteurs de pression en amont et en aval, pour permettre l'estimation de l'énergie mécanique consommée, ainsi que de capteurs de température pour établir le bilan énergétique de l'installation. A la sortie de cette zone, un échantillon de l'émulsion concentrée peut être prélevé afin de connaître la taille des gouttes de bitume avant dilution.

Les caractéristiques de chacun des éléments SMX^{™} DN15 et DN10 sont données dans le tableau suivant :

**Tableau 1**

| | DN15 | DN10 |
|---|---|---|
| Diamètre nominal (mm) | 15 | 10 |
| Longueur (mm) | 20 | 10 |

Les paramètres de fabrication sont les suivants :
- Ratio liant/phase aqueuse « savon » (étape a) : 90/10 ou 85/15 ou 80/20 ou 69/31
- Débit en zone d'émulsification : 350 kg/h ou 400 kg/h ou 450 kg/h ou 500 kg/h
- Température d'introduction du liant : 150-160°C
- Température d'introduction de la phase aqueuse « savon » (étape a) : 45-50°C
- Pression en entrée : 10 - 15 bar
- Pression en sortie du dernier élément SMX^{™} DN10: varie, selon les ratios. Eventuellement, elle est augmentée par fermeture d'une vanne d'étranglement dans le dernier élément pour éviter les bouchons de vapeur. Consigne : entre 5 et 12 bar. Plus le ratio liant/phase aqueuse « savon » est élevé ; plus la pression est faible (par exemple de 5 bar pour un ratio liant/phase aqueuse « savon » 90/10 ou 12 bar pour un ratio liant/phase aqueuse « savon » 69/31).

Dans ce mode de réalisation, le nombre de Reynolds est inférieur à 500.

Les tableaux suivants montrent les influences de divers paramètres comme le ratio bitume/savon (90/10, 85/15, 80/20 et 69/31) en fonction de la taille de gouttes. Ils présentent également les conséquences de la variation du débit de bitume (350, 400, 450 et 500kg/h) et les influences de la teneur en émulsifiant (tensioactif) dans le savon (1,6 kg de tensioactif/ t d'émulsion ; 14,5 kg/t après dilution théorique à 69%). Pour que les résultats puissent être comparés entre eux, la teneur en tensioactif est ajustée pour obtenir théoriquement une valeur de 14,5 kg/t par tonne d'émulsion théoriquement diluée à 69%.

**Tableau 2 : taille de goutte en fonction du débit de bitume pour différents ratios avec une faible concentration en tensioactif (1,6 kg/t d'émulsion finale théorique diluée à 69%)**

| | | | | |
|---|---|---|---|---|
| Débit (kg/h) | 350 | 400 | 450 | 500 |

| Fraction massique bitume : 0,69 | | | | |
|---|---|---|---|---|
| D50 (µm) | 17,5 | 16,2 | 16,7 | 16.1 |

| Fraction massique bitume : 0,85 | | | | |
|---|---|---|---|---|
| D50 (µm) | 6,8 | 7,1 | 7,2 | / |

| Fraction massique bitume : 0,90 | | | | |
|---|---|---|---|---|
| D50 (µm) | 7,0 | 7,0 | 6,0 | 7,9 |

**Tableau 3 : taille de goutte en fonction du débit de bitume pour différents ratios avec une forte concentration en tensioactif (14,5 kg/t d'émulsion finale théorique diluée à 69%)**

| | | | | |
|---|---|---|---|---|
| Débit (kg/h) | 350 | 400 | 450 | 500 |

| Fraction massique bitume : 0,80 | | | | |
|---|---|---|---|---|
| D50 (µm) | 5,1 | 5,0 | 6,0 | 5,7 |

| Fraction massique bitume : 0,85 | | | | |
|---|---|---|---|---|
| D50 (µm) | / | 2,8 | 2,9 | 3,0 |

| Fraction massique bitume : 0,90 | | | | |
|---|---|---|---|---|
| D50 (µm) | / | 1,0 | 0,9 | 1,0 |

On peut en conclure, que le débit de bitume ne semble pas avoir d'incidence sur la granulométrie de l'émulsion. Quand on fait varier le ratio de bitume, on observe que l'on obtient de meilleurs résultats avec une forte teneur en bitume, c'est-à-dire avec 85 à 90% de bitume car on obtient les plus petites tailles de gouttes. Enfin, lorsque l'on fait varier la quantité de tensioactif dans le savon, les résultats montrent une très nette réduction de la granulométrie et pour un ratio de 90% de bitume on atteint une granulométrie de l'ordre de 1µm. Cela montre qu'une forte concentration en tensioactif permet d'obtenir une granulométrie optimale.

### Exemple 2 : Dilution par le procédé selon l'invention

On fabrique une émulsion concentrée selon le procédé de l'exemple 1 (ratio 90/10). En sortie du dernier mélangeur statique, l'émulsion entre dans une canalisation simple.

Un prélèvement de cette émulsion en sortie du mélangeur statique donne les résultats suivants :
- Pourcentage massique de liant : 90%
- Taille de particules (d50) : 5,2 µm pour 1,6 kg/t d'émulsion pour une dilution théorique à 69% ; 1µm pour 14,5 kg/t d'émulsion pour une dilution théorique à 69%
- Débit en zone d'émulsification : 400 kg/h
- Température d'introduction du liant : 150-160°C
- Température d'introduction de la phase aqueuse « savon » (étape a) : 20°C
- Pression en entrée : 13 bar
- Pression en sortie du dernier mélangeur statique : 7 bar

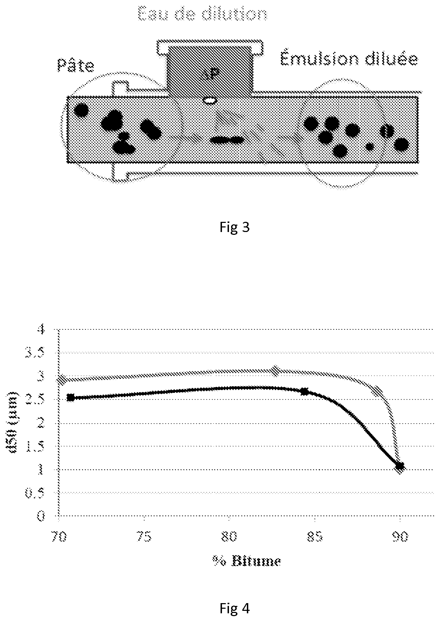

Un système d'injection (Figure 3) qui consiste à injecter l'eau sous-pression dans la pâte, à travers un orifice de 1,5 mm de diamètre a été testé. On n'a pas utilisé de système de dispersion après l'injection de l'eau de dilution.

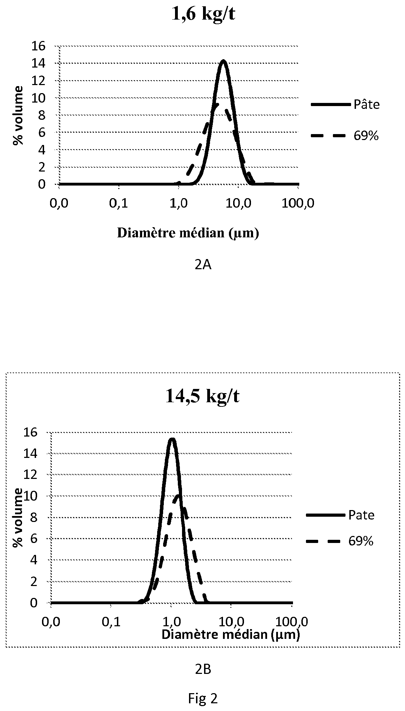

La Figure 2 (figures 2A et 2B) donne un aperçu des différences de distribution de granulométrie pour la pâte et l'émulsion diluée à 69%. On constate que ce nouveau système d'injection d'eau favorise la dilution et la dispersion des gouttelettes de bitume dans la phase continue. Dans le cas des émulsions à faible teneur en tensioactif, on obtient en taille de gouttes 5,1 µm pour une dilution de l'émulsion à 69%. Dans le cas des émulsions à forte teneur en tensioactif, on obtient en taille de gouttes 1,3 µm pour une dilution de l'émulsion à 69%.

Cet essai permet donc de conclure qu'avec ce nouveau système d'injection d'eau, on arrive à disperser de façon homogène une pâte quelle que soit la teneur en tensioactif.

### Exemple comparatif 2 : Dilution par des moyens usuels ou dilution en batch (discontinu)

### Dilution par des moyens usuels (mélangeurs statiques)

On prépare une émulsion concentrée selon le protocole donné à l'exemple 1. Ensuite, on réalise des essais de dilution en ligne (69% en bitume), de différentes pâtes, (90/10, 88/12, 85/15 et 80/20), pour deux concentrations différentes en tensioactif.

Une dilution en ligne consiste à faire passer l'émulsion concentrée dans un mélangeur statique et à introduire en amont de ce mélangeur une eau de dilution. On utilise dans ces essais l'enchaînement suivant : 1 SMX^{™} DN 15 + 2 SMX^{™} DN 10 + 2 Axflow. 1 Axflow est constitué de 6 unités de mélanges avec un diamètre de 25 mm et une longueur de 40 mm.

Pour chaque ratio, on a mesuré les tailles de particules avant et après dilution. Elles sont rapportées dans les tableaux suivants :

**Tableau 4 : Évolution de la granulométrie des émulsions diluées en fonction de la teneur en bitume (90%,88%,85% et 80%) pour une concentration faible en tensioactif (1,6kg/t).**

| | initial | Dilution à 69% |
|---|---|---|
| D50 (µm) | 90/10 | |
| | 6,2 | 9,8 |
| | 88/12 | |
| | 6,2 | 13,2 |
| | 85/15 | |
| | 9,0 | 11,7 |
| | 80/20 | |
| | 10,0 | 13,1 |

**Tableau 5 : Évolution de la granulométrie des émulsions diluées en fonction de la teneur en bitume (88%,85% et 80%) pour une concentration forte en tensioactif (14,5 kg/t).**

| | initial | Dilution à 69% |
|---|---|---|
| D50 (µm) | 88/12 | |
| | 2,0 | 3,9 |
| | 85/15 | |
| | 4,1 | 5,8 |
| | 80/20 | |
| | 8,0 | 11 |

On peut constater qu'on a toujours un écart de granulométrie entre la pâte et les émulsions diluées. On peut remarquer aussi que cet écart est moins important, pour les deux concentrations en tensioactif, si on part d'une pâte moins visqueuse.

Dans le cas des émulsions à forte teneur en tensioactif, la dilution d'une pâte à 85% en bitume entraîne une augmentation du d50 de 29% pour une dilution à 69%. Et dans le cas des émulsions faiblement concentrées en tensioactif, la dilution de cette même pâte engendre une augmentation du d50 de 26%. On a constaté que les pâtes les moins concentrées en bitume se diluent plus facilement que celles à 90%, car elles sont moins visqueuses. Lorsqu'on augmente la fraction en bitume, les interactions hydrodynamiques et les probabilités de rencontre des gouttelettes de bitume deviennent plus importantes et l'ajout de l'eau de dilution n'arrive pas les disperser.

### Dilution discontinue (en batch)

Pour démontrer l'impact du procédé sur le problème de dilution, deux émulsions concentrées 90/10 ont été diluées dans un récipient à 69 % de bitume. Une des émulsions avait une forte teneur en tensioactif, équivalent à 14,5 kg/t après dilution à 69% ; l'autre avait une faible teneur en tensioactif, équivalent à 1,6 kg/t après dilution à 69%. Ces deux émulsions ont été obtenues selon le protocole donné à l'exemple 1.

Dès l'homogénéisation des émulsions (1 minute d'agitation manuelle à l'aide d'une baguette de verre), un contrôle de la granulométrie démontre une excellente dispersion de l'émulsion. Aucune différence de granulométrie n'est mesurée entre les émulsions concentrées et les émulsions diluées.

### Dilution avec des cannes d'injection

Pour régler les problèmes liés à la dilution, on a tenté d'ajouter l'eau de dilution par des cannes d'injection en amont des mélangeurs statiques décrits en début de cet exemple. Trois configurations différentes de cannes ont été étudiées : une canne raccourcie, une canne rallongée et une canne en fente fermée au bout. Toutes les cannes conservent le même diamètre interne et la même surface spécifique d'injection du bitume.

La canne rallongée a été élaborée afin de diminuer la distance entre le point d'injection de la pâte et le système de dispersion (SMX^{™}+ Axflow^{®}). Cette canne devrait permettre de mélanger la pâte à l'eau avec une énergie mécanique fournie par le système de dispersion. La canne en fente envoie la pâte directement dans l'eau à partir d'une section rectangulaire, afin de favoriser un mélange homogène entre l'eau et la pâte, avant que le mélange soit envoyé dans le système de dispersion. On observe la même tendance pour toutes les courbes et l'écart de granulométrie persiste entre l'émulsion concentrée et les émulsions diluées.

L'ajout progressif d'eau de dilution, à la fraction massique la plus forte (90% en bitume), est présenté Figure 4. L'essai a été réalisé deux fois pour une même concentration en tensioactif (14,5 kg/t après dilution théorique à 69%) afin d'obtenir des émulsions diluées à 85%, 80% et 69%.

On constate une augmentation significative du diamètre moyen des émulsions diluées, dès l'ajout de 5% d'eau et cet écart reste constant pour les dilutions suivantes. L'augmentation de la quantité d'eau d'ajout ne permet pas de disperser les agglomérats formés.

### Exemple 3 : fabrication d'émulsions

La formulation des émulsions est donnée dans le tableau suivant :

**Tableau 6**

| | liant | | tensioactif | |
|---|---|---|---|---|
| | Bitume pur | Teneur liant | nature | Teneur [kg/t] |
| E65 | 70/100 Total | 65% | Dinoram S | 1,55 |
| E69 | 70/100 Total | 69% | Dinoram S | 1,6 |

Les émulsions conventionnelles (E69 et E65) ont été fabriquées avec le pilote SMX^{™} et diluées selon le nouveau procédé.

Les paramètres de procédé sont les suivants :

### Etape b) :

- Ratio liant/phase aqueuse « savon » (étape a) : 90/10
- Débit en zone d'émulsification : 400 kg/h
- Température d'introduction du liant : 150-160°C
- Température d'introduction de la phase aqueuse « savon » (étape a) : 45-50°C
- Pression en entrée : 12-15 bar
- Pression en sortie du dernier mélangeur statique : 5-8 bar

Dans ce mode de réalisation, le nombre de Reynolds est inférieur à 500.

### Etape c) :

- Pression dans la canalisation d'apport d'eau : 8-12 bar avec un ΔP ≥ 3 (ΔP= P(dans la canalisation d'apport d'eau) - P(pression en sortie du dernier mélangeur statique))
- Température de l'eau de dilution : 20°C

Chaque émulsion fabriquée a été contrôlée et les résultats des analyses sont notés. On a comparé les caractéristiques de ces émulsions avec celles fabriquées sur l'Atomix^{®} C.

Il ressort de ces résultats que la fabrication via les mélangeurs statiques permet d'obtenir des émulsions E69 et E65, avec des déviations standard plus petites et des tailles de gouttes moins importantes que celles obtenues via le moulin Atomix ^{®}.

**Tableau 7 - Caractéristiques des émulsions conventionnelles fabriquées par le moulin Atomix^{®}C et mélangeurs SMX^{™}**

| Emulsion | ATOMIX^{®} | | | | SMX^{™} | | | |
|---|---|---|---|---|---|---|---|---|
| | Diamètre moyen [µm] | Déviation standard | Indice de rupture : BV moyen | STV 4 mm [s] | Diamètre moyen [µm] | Déviation standard | Indice de rupture : BV moyen | STV 4 mm [s] |
| E 65 | 5,5 | 0,36 | 115 | 7 | 4,8 | 0,23 | 55 | 7 |
| E 69 | 6,7 | 0,34 | 85 | 28 | 5,1 | 0,25 | 53 | 77 |

Ces essais permettent donc de conclure que les mélangeurs statiques sont capables d'assurer la fabrication d'émulsions de types conventionnelles

### Exemple 4 : fabrication d'émulsion submicronique

### Paramètres de formulation :

Phase aqueuse : eau comprenant 19% en poids de DINORAM^{®} S et acidifiée à pH de 2 par HCl Liant bitumineux : 70/100 Total RN additivé avec 1 % en poids de Radiacid^{®} 121

La teneur en tensioactif est adaptée pour obtenir une teneur de 13,7 kg/t d'émulsion diluée à 65%.

Les paramètres de procédé sont les suivants :
Etapes a) et b) :
   - ratio liant/savon : 90/10
   - Débit en zone d'émulsification : 400 kg/h
   - Température d'introduction du liant : 150-160°C
   - Configurations des mélangeurs statiques : idem exemple 1
   - Température d'introduction de la phase aqueuse : 45-50°C
   - Pression en entrée : 12,5 bar
   - Pression en sortie du dernier mélangeur statique : 2,8 bar
Etape c)
   - Dilution à 65 % en poids de bitume
   - Pression entrée eau de dilution : 9 bar

On obtient une émulsion de bitume présentant les caractéristiques suivantes :

**Tableau 8**

| Emulsion | SMX^{™} | |
|---|---|---|
| | Diamètre moyen [µm] | Déviation standard |
| E 65 (13,7 kg/t de Dinoram S) | 1,1 | 0,13 |

### Exemple 5 : fabrication d'émulsion bimodale

Composition de l'émulsion bimodale :
- La phase aqueuse de l'émulsion bimodale est constituée de l'émulsion submicronique définie dans l'exemple 4 (65 % bitume à 13,7 kg/t de Dinoram S), d'eau et d'acide
- Le bitume d'apport (étape ii)) est un bitume 70/100 Total RN

Les quantités utilisées sont les suivantes :
∘ bitume d'apport (étape ii)) : 645 kg/t
∘ Emulsion submicronique de l'exemple 4 : 193 kg/t (dont 125,5 kg/t de bitume)
∘ Eau à pH = 2 : 162 kg/t

La teneur en liant totale dans l'émulsion bimodale est de 770,5 kg/t. La teneur finale en émulsifiant sera de 2,2 kg/t.

L'émulsion bimodale est réalisée à l'aide d'un ATOMIX^{®} C (8900 tr/min).

Dans le tableau suivant, on reporte l'analyse de l'émulsion fabriquée selon cet exemple en comparaison avec une émulsion monomodale à 69 % (1,6 kg/t de Dinoram S) de bitume obtenue à l'aide d'un Atomix^{®} C avec le même bitume :

**Tableau 9**

| | Emulsion bimodale | ECR 69 |
|---|---|---|
| D50 (µm) | 8 | 6,5 |
| D50 (µm) de la population la plus fine (d1) | 1.1 | n/a |
| D 50 de la population la plus grossière (d2) | 10 | n/a |
| d2/d1 | 9.1 | n/a |
| % du bitume apporté par l'émulsion submicronique | 16, 3 | n/a |
| Pseudo-viscosité STV 40 °C en s (NF EN 12846) | 23 | 43 |
| Indice de rupture | 57 | 72 |

L'émulsion obtenue selon l'invention permet de fabriquer des émulsions plus riches en bitume (77%) avec une viscosité STV inférieure à une émulsion à 69% de bitume obtenue avec un moulin colloïdal. Par ailleurs, on observe également une amélioration de l'indice de rupture.

Pour augmenter le débit, le diamètre des mélangeurs pourra être augmenté en veillant à conserver un régime d'écoulement laminaire voire transitoire et les mêmes conditions de ΔP. On pourra pour se faire, monter plusieurs lignes en parallèle.

## Revendications

1. Procédé pour préparer en continu une émulsion cationique de bitume ayant une taille de gouttelettes comprise entre 0,2 µm et 10 µm, comprenant les étapes suivantes :
a) Introduction dans un mélangeur statique d'un liant bitumineux à une température comprise entre 120°C et 180°C, d'une phase aqueuse, et d'au moins un tensioactif cationique, en des quantités telles que la concentration en liant bitumineux soit supérieure à 80% en poids ; puis
b) Mélange des constituants dans le mélangeur statique ou dans un enchainement de mélangeurs statiques, dans des conditions telles que ΔP ≤ 40 bar avec ΔP = P(entrée 1^{er} mélangeur statique) - P(sortie dernier mélangeur statique) pour obtenir une émulsion de type bitume-dans-eau ayant une taille de gouttelettes comprise entre 0,2 et 10µm et une teneur en liant bitumineux supérieure à 80% en poids ;
c) Consécutivement à l'étape b), dilution en ligne de l'émulsion obtenue suite à l'étape b), par ajout dans la canalisation comprenant ladite émulsion d'un flux pressurisé de phase aqueuse pour obtenir une émulsion de type bitume-dans-eau ayant une taille de gouttelettes comprise entre 0,2 et 10µm et une teneur en liant bitumineux comprise entre 50 et 75% en poids
d) Stockage de l'émulsion obtenue suite à l'étape c)

2. Procédé selon la revendication 1, **caractérisé en ce que** à l'étape c) la différence de pression entre la pression dans la canalisation d'apport de la phase aqueuse de dilution et la pression dans la canalisation d'apport de l'émulsion à diluer est supérieure à 2, plus avantageusement comprise entre 2 et 10 bar.

3. Procédé selon l'une quelconque des revendications précédentes, **caractérisé en ce que**, lors de l'étape b), le ΔP est inférieur ou égal à 20 bar, avantageusement inférieur ou égal à 15 bar.

4. Procédé selon l'une quelconque des revendications précédentes, **caractérisé en ce que**, lors de l'étape b), le ΔP varie de 5 à 8 bar et l'émulsion obtenue à une taille de gouttelettes supérieure à 2 µm.

5. Procédé selon l'une quelconque des revendications précédentes, **caractérisé en ce que**, lors de l'étape b), le ΔP varie de 8 à 15 bar et l'émulsion obtenue à une taille de gouttelettes inférieure à 2 µm

6. Procédé selon l'une quelconque des revendications précédentes, **caractérisé en ce que** le débit de l'étape b) est compris entre 10 et 40 T/h, avantageusement entre 20 et 30 T/h.

7. Procédé selon l'une quelconque des revendications précédentes, **caractérisé en ce qu'**il comprend à la fin de l'étape c) une étape de refroidissement à une température inférieure à 100°C.

8. Procédé selon l'une quelconque des revendications précédentes, **caractérisé en ce que** à l'étape a), le liant bitumineux est introduit à une température comprise entre 130°C et 160°C.

9. Procédé selon l'une quelconque des revendications précédentes, **caractérisé en ce que** à l'étape a), la phase aqueuse est introduite à une température comprise entre 15°C et 60 °C.

10. Procédé selon l'une quelconque des revendications précédentes, **caractérisé en ce que** la teneur en tensioactifs varie avantageusement de 0,1 à 3% en poids, par rapport au poids total de l'émulsion diluée, plus avantageusement de 0,1 à 2% en poids.

11. Procédé selon la revendication 1, comprenant en outre une étape de mélange de l'émulsion obtenue suite à l'étape c) ou d) avec une phase aqueuse et un liant bitumineux pour obtenir une émulsion cationique bimodale de bitume comprenant deux populations de particules,
dans lequel lors de l'étape a) le tensioactif cationique est introduit en une quantité telle que l'émulsion comprenne plus de 4 kg de tensio-actif par tonne d'émulsion, et dans lequel lors de l'étape b), le ΔP varie de 8 à 15 bar pour obtenir une émulsion ayant une taille de gouttelettes comprise entre 0,2 et 2 µm.

12. Procédé selon la revendication 11, **caractérisé en ce que** le diamètre médian de la première population de particules est au moins 2 fois plus petit que celui de la deuxième population de particules, et préférentiellement au moins 6 fois inférieur.

## Patentansprüche

1. Verfahren zur kontinuierlichen Herstellung einer kationischen Bitumenemulsion mit einer Tröpfchengröße zwischen 0,2 µm und 10 µm, umfassend die folgenden Schritte:
a) Einbringen eines bituminösen Bindemittels bei einer Temperatur zwischen 120°C und 180°C, einer wässrigen Phase und mindestens eines kationischen Tensids in einen statischen Mischer in solchen Mengen, dass die Konzentration des bituminösen Bindemittels über 80 Gew.-% liegt; dann
b) Mischen der Bestandteile im statischen Mischer oder in einer Abfolge statischer Mischer unter solchen Bedingungen, dass ΔP ≤ 40 bar mit ΔP = P(Eingang·1. statischer Mischer) - P(Ausgang letzter statischer Mischer), um eine Emulsion vom Typ Bitumen-in-Wasser mit einer Tröpfchengröße zwischen 0,2 und 10 µm und einem Gehalt an bituminösem Bindemittel über 80 Gew.-% zu erhalten;
c) nach von Schritt b) Inline-Verdünnung der nach Schritt b) erhaltenen Emulsion durch Zugabe eines unter Druck stehenden Stroms wässriger Phase in die die Emulsion enthaltende Leitung, um eine Emulsion vom Typ Bitumen-in-Wasser mit einer Tröpfchengröße zwischen 0,2 und 10 µm und einem Gehalt an bituminösem Bindemittel zwischen 50 und 75 Gew.-% zu erhalten,
d) Lagerung der nach Schritt c) erhaltenen Emulsion.

2. Verfahren nach Anspruch 1, **dadurch gekennzeichnet, dass** in Schritt c) die Druckdifferenz zwischen dem Druck in der Zufuhrleitung der wässrigen Verdünnungsphase und dem Druck in der Zufuhrleitung der zu verdünnenden Emulsion größer als 2 ist, vorteilhafter zwischen 2 und 10 bar liegt.

3. Verfahren nach einem der vorhergehenden Ansprüche, **dadurch gekennzeichnet, dass** in Schritt b) ΔP kleiner oder gleich 20 bar, in vorteilhafter Weise kleiner oder gleich 15 bar ist.

4. Verfahren nach einem der vorhergehenden Ansprüche, **dadurch gekennzeichnet, dass** in Schritt b) ΔP von 5 bis 8 bar schwankt und die erhaltene Emulsion eine Tröpfchengröße über 2 µm hat.

5. Verfahren nach einem der vorhergehenden Ansprüche, **dadurch gekennzeichnet, dass** in Schritt b) ΔP von 8 bis 15 bar schwankt und die erhaltene Emulsion eine Tröpfchengröße unter 2 µm hat.

6. Verfahren nach einem der vorhergehenden Ansprüche, **dadurch gekennzeichnet, dass** der Durchsatz von Schritt b) zwischen 10 und 40 T/Std, vorteilhafterweise zwischen 20 und 30 T/Std liegt.

7. Verfahren nach einem der vorhergehenden Ansprüche, **dadurch gekennzeichnet, dass** es am Ende von Schritt c) einen Schritt des Abkühlens auf eine Temperatur unter 100°C umfasst.

8. Verfahren nach einem der vorhergehenden Ansprüche, **dadurch gekennzeichnet, dass** in Schritt a) das bituminöse Bindemittel bei einer Temperatur zwischen 130°C und 160°C eingebracht wird.

9. Verfahren nach einem der vorhergehenden Ansprüche, **dadurch gekennzeichnet, dass** in Schritt a) die wässrige Phase bei einer Temperatur zwischen 15°C und 60°C eingebracht wird.

10. Verfahren nach einem der vorhergehenden Ansprüche, **dadurch gekennzeichnet, dass** der Gehalt an Tensiden in vorteilhafter Weise von 0,1 bis 3 Gew.-% bezogen auf das Gesamtgewicht der verdünnten Emulsion, vorteilhafter von 0,1 bis 2 Gew.-%, schwankt.

11. Verfahren nach Anspruch 1, umfassend ferner einen Schritt des Mischens der nach Schritt c) erhaltenen Emulsion oder d) mit einer wässrigen Phase und einem bituminösen Bindemittel, um eine bimodale kationische Bitumenemulsion zu erhalten, die zwei Partikelpopulationen umfasst,
wobei in Schritt a) das kationische Tensid in einer Menge eingebracht wird, die derart ist, dass die Emulsion über 4 kg Tensid pro Tonne Emulsion umfasst, und wobei in Schritt b) ΔP von 8 bis 15 bar schwankt, um eine Emulsion mit einer Tröpfchengröße zwischen 0,2 und 2 µm zu erhalten.

12. Verfahren nach Anspruch 11, **dadurch gekennzeichnet, dass** der Mediandurchmesser der ersten Partikelpopulation mindestens zweimal kleiner ist als der der zweiten Partikelpopulation und vorzugsweise mindestens sechsmal kleiner.

## Claims

1. A method for continuously preparing a cationic bitumen emulsion having a droplet size comprised between 0.2 µm and 10 µm, comprising the following steps:
a) Introduction into a static mixer of a bituminous binder at a temperature comprised between 120°C and 180°C, of an aqueous phase, and of at least one cationic surfactant, in quantities such as the concentration of bituminous binder is greater than 80% by weight; then
b) Mixing of the constituents in the static mixer or in a sequence of static mixers, under conditions such that ΔP ≤ 40 bar with ΔP = P(input 1st static mixer) - P(output last static mixer) to obtain a bitumen-in-water type emulsion having a droplet size comprised between 0.2 and 10 µm and a bituminous binder content greater than 80% by weight;
c) Subsequently to step b), online dilution of the emulsion obtained following step b), by adding a pressurized flow of aqueous phase to the pipe comprising said emulsion to obtain a bitumen-in-water type emulsion having a droplet size comprised between 0.2 and 10 µm and a bituminous binder content comprised between 50 and 75% by weight
d) Storage of the emulsion obtained following step c) .

2. The method according to claim 1, **characterized in that** in step c) the pressure difference between the pressure in the supply pipe of the aqueous dilution phase and the pressure in the supply pipe of the emulsion to be diluted is greater than 2, more advantageously between 2 and 10 bar.

3. The method according to any one of the preceding claims, **characterized in that**, during step b), the ΔP is less than or equal to 20 bar, advantageously less than or equal to 15 bar.

4. The method according to any one of the preceding claims, **characterized in that**, during step b), the ΔP varies from 5 to 8 bar and the emulsion obtained has a droplet size greater than 2 µm.

5. The method according to any one of the preceding claims, **characterized in that**, during step b), the ΔP varies from 8 to 15 bar and the emulsion obtained has a droplet size less than 2 µm.

6. The method according to any one of the preceding claims, **characterized in that** the flow rate of step b) is comprised between 10 and 40 T/h, advantageously between 20 and 30 T/h.

7. The method according to any one of the preceding claims, **characterized in that** it comprises at the end of step c) a cooling step to a temperature below 100°C.

8. The method according to any one of the preceding claims, **characterized in that** in step a), the bituminous binder is introduced at a temperature comprised between 130°C and 160°C.

9. The method according to any one of the preceding claims, **characterized in that** in step a), the aqueous phase is introduced at a temperature comprised between 15°C and 60°C.

10. The method according to any one of the preceding claims, **characterized in that** the content of surfactants advantageously varies from 0.1 to 3% by weight, relative to the total weight of the diluted emulsion, more advantageously from 0.1 to 2% by weight.

11. The method according to claim 1, further comprising a step of mixing the emulsion obtained following step c) or d) with an aqueous phase and a bituminous binder to obtain a bimodal cationic bitumen emulsion comprising two populations of particles,
in which during step a) the cationic surfactant is introduced in a quantity such that the emulsion comprises more than 4 kg of surfactant per ton of emulsion, and in which during step b), the ΔP varies from 8 to 15 bar to obtain an emulsion having a droplet size comprised between 0.2 and 2 µm.

12. The method according to claim 11, **characterized in that** the median diameter of the first population of particles is at least 2 times smaller than that of the second population of particles, and preferably at least 6 times smaller.
